# FASCICULE DE BREVET EUROPEEN

(11) **EP 1 802 474 B1**
(45) Date de publication et mention de la délivrance du brevet: **24.12.2008**
(21) Numéro de dépôt: 05791976.3
(22) Date de dépôt: 12.10.2005
(51) Int. Cl.: B60C 11/01

(54) **PNEUMATIQUE POURVU DE DEUX PROTUBERANCES POUR DEVIER LES PROJECTIONS LATERALES**
MIT ZWEI VORSPRÜNGEN ZUM ABLEITEN VON LATERALEN SPRITZERN VERSEHENER REIFEN
TYRE PROVIDED WITH TWO PROTUBERANCES FOR DEVIATING LATERAL PROJECTIONS

(30) Priorité: 12.10.2004 FR 0410828
(43) Date de publication de la demande: 04.07.2007
(73) Titulaire: Société de Technologie Michelin, 63000 Clermont-Ferrand (FR); Michelin Recherche et Technique S.A., 1763 Granges-Paccot (CH)
(72) Inventeur: MOREL-JEAN, Jacques, F-63200 RIOM (FR)
(74) Mandataire: Diernaz, Christian
(86) Numéro de dépôt international: PCT/EP2005/055197
(87) Numéro de publication internationale: WO 2006/040331

(56) Documents cités:
- EP-A- 1 048 489
- US-A- 3 976 115
- US-A- 4 356 985

## Description

L'invention concerne les pneumatiques pour véhicules routiers de type poids lourd et en particulier les pneumatiques qui sont pourvus de dispositifs pour dévier les projections latérales d'eau lorsqu'un véhicule équipé desdits pneumatiques roule sur une chaussée recouverte d'eau.

Lors d'un roulage par temps de pluie, les manoeuvres de dépassement ou de croisement avec un véhicule poids lourd sont souvent très délicates pour les autres usagers compte tenu des quantités importantes d'eau qui peuvent être projetées latéralement par ledit véhicule et qui, en atteignant les pare-brise des autres véhicules, réduisent considérablement la visibilité.

Un pneumatique pour poids lourd est de façon générale composé de deux bourrelets destinés à être en contact avec une jante de montage, d'un sommet pourvu d'une bande de roulement présentant une surface de roulement destinée à venir en contact avec le sol pendant le roulage et de deux flancs assurant la liaison entre cette bande de roulement et les bourrelets.

Un tel pneumatique est renforcé par une armature de carcasse s'étendant d'un bourrelet à l'autre et une armature de renforcement du sommet située radialement à l'extérieur de l'armature de carcasse, cette armature de sommet comprenant au moins deux nappes de renforts empilées c'est-à-dire placées les unes sur les autres. Chaque nappe de l'armature de sommet est en général composée d'une pluralité de renforts disposés de manière à faire un angle allant de 0° à 70° avec la direction circonférentielle, mais il n'est cependant pas exclu que l'angle des renforts puisse être supérieur à 70°.

La bande de roulement d'un pneumatique poids lourd est pourvue d'une sculpture formée d'éléments de relief délimités par des découpures (rainures et/ou incisions) destinées à assurer, entre autres, au pneumatique des performances d'adhérence sur route mouillée.

Le pneumatique présente un encombrement de largeur maximale L mesuré au niveau de ses flancs lorsqu'il est monté sur sa roue de montage et soumis à ses conditions nominales d'utilisation de pression et de charge (L représente la distance maximale entre les points des flancs axialement les plus éloignés).

Le brevet européen EP 1048489 décrit la mise en oeuvre d'un dispositif comprenant au moins une protubérance en mélange de caoutchouc prévue sur au moins un des flancs du pneumatique.

Ces éléments forment des protubérances dont le rôle est de dévier/modifier la trajectoire du flux de liquide projeté afin d'éviter que ce flux ne soit projeté trop en hauteur en formant un brouillard gênant les autres usagers de la route et notamment ceux effectuant une manoeuvre de dépassement ou de croisement du véhicule.

La solution décrite dans ce brevet permet de limiter les augmentations de températures à l'intérieur de la bande de roulement et notamment au voisinage des extrémités des nappes de renforcement de sommet.

Toutefois, il apparaît à l'usage que le dispositif décrit dans ce brevet perd de son efficacité avec l'usure de la bande de roulement puisque celui-ci, du fait même de l'usure, tend à se rapprocher de plus en plus de la surface de la chaussée.

Le pneumatique de l'invention cherche à améliorer cet état de fait en proposant une solution telle que la distance minimale du dispositif évacuateur d'eau soit toujours supérieure à une distance minimale efficace de la chaussée pendant toute la durée d'utilisation du pneumatique (c'est-à-dire jusqu'à atteindre le niveau correspondant à une usure limite nécessitant un changement de pneumatique ou un rechapage par mise en place d'une nouvelle bande de roulement).

Dans ce but, un pneumatique pour véhicule poids lourd selon l'invention comprend :
- deux bourrelets destinés à être en contact avec une jante de montage,
- un sommet pourvu d'une bande de roulement présentant une surface de roulement destinée à venir en contact avec le sol pendant le roulage,
- deux flancs faisant la liaison entre le sommet et les bourrelets,
- une première protubérance en saillie sur un desdits flancs et une seconde protubérance en saillie sur l'autre desdits flancs pour dévier latéralement les projections d'eau lors d'un roulage sur chaussée mouillée, lesdites protubérances étant décalées radialement par rapport à la surface de roulement,
ce pneumatique étant caractérisé en ce que les décalages radiaux des première et seconde protubérances sont différents.

Par définition, le décalage radial d'une protubérance est mesuré, sur une coupe méridienne (c'est-à-dire dans un plan contenant l'axe de rotation) comme la distance radiale (c'est-à-dire perpendiculairement à l'axe de rotation) entre un point du profil extérieur de la protubérance obtenu comme le point de tangence d'une droite tangente audit profil extérieur et passant par un point de la bande de roulement situé axialement le plus à l'extérieur du côté de la protubérance et un point axialement le plus à l'extérieur de la bande de roulement.

Le profil extérieur d'un protubérance comprend de part et d'autre de ce point de tangence une premier profil radialement externe et un second profil radialement interne, ces premier et second profils se raccordant au profil externe du flanc du pneumatique.

Préférentiellement, l'écart des décalages radiaux est au moins égal à la moitié de l'épaisseur de la bande de roulement; l'épaisseur de la bande de roulement étant mesurée à l'état neuf entre la surface de roulement de ladite bande et la première nappe de renforcement du sommet du pneumatique.

Dans une variante de réalisation avantageuse d'un pneumatique selon l'invention, chaque protubérance est en totalité située radialement à l'intérieur d'un profil identique au profil transversal de la bande de roulement et ce profil étant déplacé radialement vers l'intérieur d'au moins la moitié de l'épaisseur de ladite bande de roulement, de manière à réduire la quantité de mélange de caoutchouc supplémentaire liée à la présence d'une protubérance.

Grâce au pneumatique selon l'invention, il est possible à l'utilisateur de choisir le sens de montage dudit pneumatique en plaçant côté extérieur véhicule soit l'une soit l'autre des protubérances, étant entendu que préférentiellement, un pneumatique neuf selon l'invention est placé sur un véhicule de telle sorte que le flanc comportant la protubérance ayant le plus petit décalage radial (c'est-à-dire celui dont la paroi externe est la plus proche de la chaussée) soit situé à l'extérieur du véhicule sur lequel est monté ledit pneumatique. Pour faciliter le montage du pneumatique à l'état neuf, il est préférable que ce pneumatique soit pourvu d'un signe visible pour indiquer le sens de montage sur un véhicule, la protubérance dont la distance radiale des points de raccordement entre la paroi externe et interne est la plus grande étant placée côté extérieur véhicule.

Après usure partielle de la bande de roulement d'un pneumatique selon l'invention, ledit pneumatique est alors retourné sur sa jante de montage de manière à présenter sur le flanc extérieur au véhicule la seconde protubérance qui, compte tenu qu'elle était sensiblement plus éloignée de la chaussée que la première est alors efficace puisqu'elle est à une distance radiale par rapport à la chaussée supérieure à celle de l'autre protubérance.

Dès lors que le pneumatique comprend une armature de renforcement du sommet située radialement à l'extérieur de l'armature de carcasse, cette armature de sommet comprenant au moins deux nappes superposées et chaque nappe étant pourvue de renforts sous la forme de fils ou câbles, il est judicieux d'appliquer l'enseignement du brevet EP 1048489. Dans ce cas, la protubérance située au plus près de la surface de roulement à l'état neuf répond aux critères énoncés dans ce brevet (l'autre protubérance étant encore plus éloignée de ladite surface satisfait elle même à ces critères).

De cette manière, il est en effet possible à la fois d'obtenir un effet pérenne pendant toute la durée d'utilisation d'un pneumatique selon l'invention et de limiter les élévations de température au voisinage des extrémités de nappes consécutives à l'ajout de matière caoutchouteuse.

La disposition selon l'invention des protubérances sur chacun des flancs permet en outre, et dès lors que le profil radialement interne desdites protubérances est approprié, un empilage aisé des pneumatiques les uns sur les autres du fait que les protubérances n'empêchent plus cet empilage : on s'arrange pour mettre un flanc pourvu d'une protubérance initialement la plus éloignée de la surface de roulement en contact avec un flanc pourvu d'une protubérance située au plus près de la surface de roulement. Par profil radialement interne approprié, on entend ici que celui-ci doit permettre de loger la protubérance d'un autre pneumatique lors de l'empilage. Ce profil est dit complémentaire dès lors qu'il est possible d'emboîter les protubérances l'une dans l'autre tout en ayant un contact latéral entre lesdites protubérances. Ainsi il est possible d'obtenir un effet de centrage et de blocage lors de la formation d'une pile de pneumatiques.

L'invention propose aussi une méthode d'utilisation de pneumatiques comportant des flancs, une bande de roulement et une protubérance sur chaque flanc pour dévier les projections latérales d'eau, ladite méthode consistant à :
- réaliser de tels pneumatiques en prévoyant de mettre une première protubérance avec un premier décalage radial par rapport à la surface externe de la bande de roulement et une seconde protubérance sur l'autre flanc avec un second décalage radial, le premier décalage radial étant inférieur au second;
- monter, à l'état neuf, sur un essieu d'un véhicule poids lourd, de tels pneumatiques en position droite et en position gauche, de telle façon que lesdits pneumatiques présentent leurs flancs pourvus des premières protubérances orientés vers l'extérieur dudit véhicule;
- réaliser un retournement de chacun desdits pneumatiques sur leur roue après une usure partielle des bandes de roulement de manière à présenter les flancs pourvus des secondes protubérances orientés vers l'extérieur du véhicule pour poursuivre l'usure de la bande de roulement jusqu'à la limite d'usure prévue.

Préférentiellement, les pneumatiques selon l'invention sont montés sur l'essieu avant.

L'invention sera mieux comprise à l'aide du dessin joint à la présente description, ce dessin comprenant des variantes données à titre d'exemples non limitatifs :
la figure 1 montre une coupe méridienne schématique d'un pneumatique pour poids lourd selon l'invention comprenant une protubérance sur chacun de ses flancs ;
la figure 2 montre, en superposition, une variante de réalisation de protubérances sur des flancs d'un même pneumatique ;
la figure 3 montre la constitution d'une pile de pneumatiques pourvus de protubérances selon l'invention.

Par souci de simplification, les mêmes éléments matériels sur les figures comportent les mêmes signes de références.

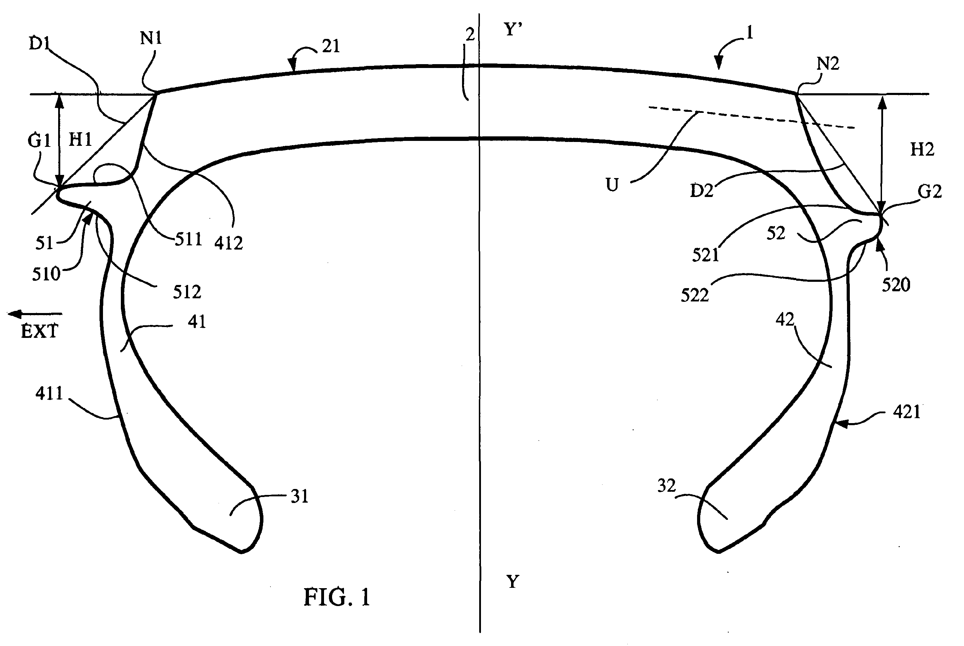

La figure 1 représente une coupe partielle d'un pneumatique pour poids lourd selon l'invention réalisée dans un plan méridien, c'est-à-dire dans un plan contenant l'axe de rotation dudit pneumatique. Ce pneumatique 1 de dimension 315/70 R 22.5 comprend une région de sommet 2 reliée à des bourrelets 31, 32 respectivement par des flancs 41, 42. Le sommet 2 du pneumatique comporte une surface de roulement 21 radialement à l'extérieur, cette surface étant destinée à venir en contact avec la chaussée pendant le roulage du pneumatique. Cette surface 21 se termine axialement en deux points N1 et N2 à partir desquels se raccordent les profils externe des flancs 41, 42. Les points N1 et N2 correspondent aux points axialement les plus à l'extérieur de l'empreinte de contact de la surface de roulement sous les conditions nominales d'usage du pneumatique. Le pneumatique montré à la figure 1 correspond au pneumatique à la sortie du moule de vulcanisation.

Sur chaque flanc 41, 42 on distingue une protubérance 51, 52 en saillie vers l'extérieur par rapport au pneumatique. Chaque protubérance 51, 52 est dans le cas présent réalisée par moulage au moment du moulage et de la vulcanisation du pneumatique 1.

La protubérance 51 (respectivement 52) est limitée par une surface externe (dont on voit le profil 510 -respectivement 520 - sur la coupe) comprenant une surface supérieure 511 (respectivement 521) radialement à l'extérieur et une surface inférieure 512 (respectivement 522) radialement à l'intérieur, l'intersection desdites deux surfaces se faisant suivant une ligne dont la trace sur le plan de coupe correspond à un point G1 (respectivement G2). On note G1 (respectivement G2) le point de tangence d'une droite virtuelle D1 (respectivement D2) passant par le point d'extrémité axiale N1 (respectivement N2) de la surface de roulement 21 et tangente au profil extérieur 510 (respectivement 520) de la protubérance 51 (respectivement 52).

Le profil extérieur du flanc 41 (respectivement 42) est constitué des trois parties suivantes:
- une partie 412 (respectivement 422) quasiment rectiligne prenant naissance au point N1 et s'étendant radialement vers l'intérieur et axialement vers l'extérieur,
- une partie 411 (respectivement 421) du profil du flanc reliée au bourrelet 31 (respectivement 32),
- le profil extérieur 510 (respectivement 520) de la protubérance 51 reliant les deux précédentes parties de profil flanc.

Selon l'invention, le pneumatique 1 est monté sur un véhicule de façon que son flanc 41 soit placé à l'extérieur dudit véhicule (repéré par une flèche marquée EXT), la distance radiale H1 entre le point G1 et le point N1 étant supérieure à la distance radiale H2 entre le point G2 et le point N2. Par distance radiale entre deux points, on entend la distance entre ces points mesurée dans une direction perpendiculaire à l'axe de rotation.

De cette manière, l'efficacité est assurée pendant une première phase d'utilisation du pneumatique, c'est-à-dire au moins jusqu'à une usure correspondant à un niveau repéré sur la figure 1 par la courbe U tracée en pointillés.

Après cette première phase d'usage, le pneumatique est alors monté sur le même véhicule de manière à ce que la protubérance 52 soit désormais positionnée à l'extérieur dudit véhicule pour modifier la trajectoire du flux de liquide projeté tout en étant à une distance appropriée du sol. Compte tenu de l'écart initial de hauteur entre les deux protubérances, la protubérance 52 se trouve maintenant à une distance du sol sensiblement identique à celle de la protubérance 51 à l'état neuf.

Préférentiellement, l'écart de distance radiale (égal à la différence entre les distances H1 et H2) entre les points G1 et G2 est au moins égal à la hauteur de mélange de caoutchouc usé entre l'état neuf et le niveau d'usure repéré par la courbe U.

Dans le cas présenté avec la figure 1, les protubérances 51 et 52 ont des profils géométriques, vus dans le plan de coupe méridien, qui ne sont pas identiques. Elles se distinguent par des distances axiales L1 et L2, respectivement, qui sont différentes ; la distance axiale L1 de la protubérance 51 mesurée dans la direction axiale par rapport au point axialement le plus à l'extérieur du flanc 41 pourvu de ladite protubérance est supérieure à la distance axiale L2 de la protubérance 52 mesurée par rapport au point axialement le plus à l'extérieur du flanc 42 portant la protubérance 52.

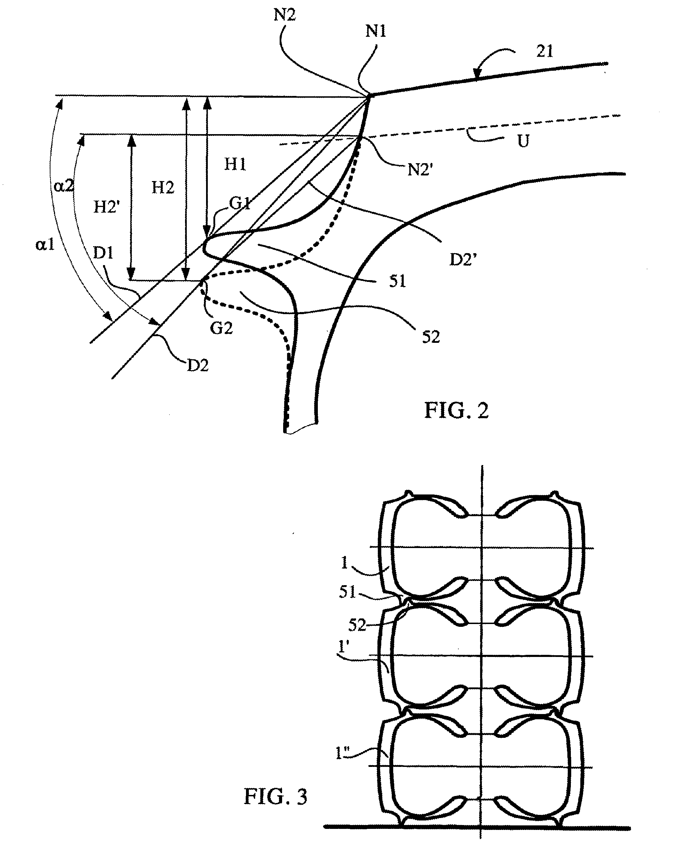

La figure 2 représente une superposition des profils des protubérances 51 et 52 d'une variante avantageuse de pneumatique selon l'invention. Hormis un décalage dans la direction radiale, ces protubérances 51 et52 ont dans le cas présent un profil en coupe identique.

Dans cette variante, les protubérances sont conçues de façon qu'à l'état neuf les droites virtuelles D1 et D2 fassent respectivement des angles a1 et a2 différents, lesdites droites D1 et D2 passant par les points d'extrémité axiale N1 et N2 de la surface de roulement 21 et tangentes respectivement aux protubérances 51 et 52 aux points G1 et G2. Selon l'invention, les points G1 et G2 sont, respectivement, à des distances H1 et H2 d'une droite parallèle à l'axe de rotation et passant par les points N1 et N2.

Après une usure sensiblement égale à la moitié de l'épaisseur à user de la bande de roulement (ce niveau d'usure étant repéré par la ligne U en traits pointillés), la droite virtuelle D2' passant par le nouveau point d'extrémité axiale N2' de la surface de roulement et tangente à la protubérance 52 initialement placée côté intérieur véhicule est sensiblement parallèle à la droite D1 tangente à la protubérance 51 placée initialement côté extérieur véhicule. De cette façon, on conserve une efficacité inchangée même après une usure partielle correspondant à la moitié de l'épaisseur de la bande de roulement.

Dans les variantes présentées aux figures 1 et 2, les éléments de renforcements de la structure interne des pneumatiques n'ont pas été représentés de façon à ne pas compliquer lesdites figures. Il est bien entendu que l'enseignement du document EP 1048489 peut avantageusement être appliqué à ces deux variantes : dans pareil cas, les protubérances sont disposées en tenant compte des éléments de renforcement interne de manière à limiter l'incidence sur le niveau thermique des mélanges de caoutchouc résultant de la présence desdites protubérances.

Bien que la réalisation de protubérances continues dans le sens circonférentiel soit préférée, on ne sort pas du cadre de l'invention en réalisant au moins une des protubérances de façon discontinue dans le sens circonférentiel, les discontinuités étant appropriées pour ne pas trop réduire l'effet escompté sur la déviation du flux de liquide en roulage.

La figure 3 montre un empilement de trois pneumatiques 1, 1' et 1" identiques. Chacun de ces pneumatiques comporte sur un flanc une protubérance 51 et sur l'autre flanc une protubérance 52, lesdites protubérances étant positionnées conformément à l'invention. Grâce à l'écart de distance radiale de ces protubérances, il est aisé de réaliser un empilement tel que montré, le flanc 41 pourvu d'une protubérance 51 d'un pneumatique 1 étant en contact avec le flanc 42 pourvu d'une protubérance 52 d'un pneumatique 1'. En choisissant l'écart de distance radiale des protubérances et les géométries radialement à l'intérieur des profils desdites protubérances (comme représenté) il est possible d'obtenir un effet de centrage de l'ensemble des pneumatiques d'une même pile.

## Revendications

1. - Pneumatique (1) pour véhicule poids lourd comportant :
- deux bourrelets (31, 32) destinés à être en contact avec une jante de montage,
- un sommet pourvu d'une bande de roulement (2) présentant une surface de roulement (21) destinée à venir en contact avec le sol pendant le roulage,
- deux flancs (41, 42) assurant la liaison entre cette bande de roulement et les bourrelets,
- une première protubérance (51) en saillie sur un desdits flancs et une seconde protubérance (52) en saillie sur l'autre desdits flancs pour dévier latéralement les projections d'eau lors d'un roulage sur chaussée mouillée, lesdites protubérances (51, 52) étant décalées radialement par rapport à la surface de roulement,
ce pneumatique étant **caractérisé en ce que** les décalages radiaux (H1, H2) des première et seconde protubérances (51, 52) sont différents, le décalage radial d'une protubérance étant égal, sur une coupe méridienne, à la distance radiale, c'est-à-dire perpendiculairement à l'axe de rotation, entre un point axialement le plus à l'extérieur de la bande de roulement et un point du profil extérieur de la protubérance obtenu comme le point de tangence d'une droite tangente audit profil extérieur et passant par ledit point de la bande de roulement situé axialement le plus à l'extérieur du côté de la protubérance.

2. - Pneumatique (1, 1') pour véhicule poids lourd selon la revendication 1 **caractérisé en ce que,** l'écart des décalages radiaux (H1, H2) est au moins égal à la moitié de l'épaisseur de la bande de roulement.

3. - Pneumatique (1, 1') pour véhicule poids lourd selon la revendication 1 ou la revendication 2 **caractérisé en ce que** chaque protubérance (51, 52) est toute entière situé radialement à l'intérieur d'un profil identique au profil transversal de la bande de roulement et ce profil étant déplacé radialement vers l'intérieur d'au moins la moitié de l'épaisseur de ladite bande de roulement, de manière à réduire la quantité de mélange de caoutchouc supplémentaire liée à la présence d'une protubérance.

4. - Pneumatique (1) pour véhicule poids lourd selon l'une des revendications 1 à 3 **caractérisé en ce que** les profils radialement externe de la protubérance d'un flanc et radialement interne de la protubérance de l'autre flanc sont complémentaires, c'est-à-dire que ces protubérances permettent l'emboîtage d'un pneumatique sur un autre pneumatique, lesdits pneumatiques étant pourvus avec ces deux protubérances, les protubérances dans la position emboîtée étant en contact l'une contre l'autre.

5. - Pneumatique (1) pour véhicule poids lourd selon l'une des revendications 1 à 4 **caractérisé en ce qu'**il est pourvu d'un signe visible pour indiquer le sens de montage dudit pneumatique neuf sur un véhicule, la protubérance dont la distance radiale des points de raccordement entre la paroi externe et interne est la plus grande étant placée côté extérieur véhicule.

6. - Méthode d'utilisation de pneumatiques sur un véhicule poids lourd, ces pneumatiques comportant des flancs (41, 42), une bande de roulement et une protubérance (51, 52) sur chaque flanc pour dévier les projections latérales d'eau, ladite méthode consistant à :
- réaliser de tels pneumatiques en prévoyant de mettre sur un flanc (41) une première protubérance (51) avec un premier décalage radial (H1) par rapport à la surface externe de la bande de roulement et une seconde protubérance (52) sur l'autre flanc (42) avec un second décalage radial (H2), le premier décalage radial (H1) étant inférieur au second décalage radial (h2);
- monter, à l'état neuf, sur un essieu d'un véhicule poids lourd, de tels pneumatiques en position droite et en position gauche, de telle façon que lesdits pneumatiques présentent leurs flancs (41) pourvus des premières protubérances (51) orientés vers l'extérieur dudit véhicule;
- après une usure partielle des bandes de roulement, réaliser un retournement de chacun desdits pneumatiques sur leur roue de manière à présenter les flancs (42) pourvus des secondes protubérances (52) orientés vers l'extérieur du véhicule et poursuivre l'usage des pneumatiques jusqu'à usure limite prévue de la bande de roulement.

7. - Méthode d'utilisation selon la revendication 6 **caractérisée en ce que** les pneumatiques pourvus de protubérances sont montés sur l'essieu avant du véhicule.

## Claims

1. - Heavy goods vehicle tyre **(1)** comprising:
- two beads **(31, 32)** intended to be in contact with a wheel rim,
- a crown provided with a tread **(2)** having a running surface **(21)** intended to be in contact with the ground when the vehicle is running,
- two sidewalls **(41, 42)** for joining this tread to the beads,
- a first protuberance (51) projecting from one of said sidewalls and a second protuberance (52) projecting from the other of said sidewalls for laterally deflecting water expulsions when running on a wet road, said protuberances (51, 52) being radially offset relative to the running surface,
this tyre being **characterized in that** the radial offsets (H1, H2) of the first and second protuberances (51, 52) are different, the radial offset of one protuberance being equal, on a meridianal section, to the radial distance, i.e. perpendicular to the rotation axis, between an axially outermost point on the tread and a point on the outer profile of the protuberance obtained as the point of tangency of a tangent line to said outer profile and passing through said axially outermost point on the tread on the same side as the protuberance.

2. - Heavy goods vehicle tyre **(1, 1')** according to Claim 1, **characterized in that** the difference in the radial offsets (H1, H2) is at least equal to one half of the thickness of the tread.

3. - Heavy goods vehicle tyre (1, 1') according to Claim1 or Claim 2, **characterized in that** each protuberance (51, 52) lies entirely radially on the inside of a profile identical to the transverse profile of the tread and this profile being displaced radially inwards by at least one half of the thickness of said tread so as to reduce the amount of additional rubber compound associated with the presence of a protuberance.

4. - Heavy goods vehicle tyre (1) according to one of Claims 1 to 3, **characterized in that** the radially external profile of the protuberance on one sidewall and the radially internal profile of a protuberance on the other sidewall are complementary, that is to say these protuberances allow the nesting of one tyre on another tyre, said tyres being provided with these two protuberances, the protuberances being in contact with each other in the nested position.

5. - Heavy goods vehicle tyre (1) according to one of Claims 1 to 4, **characterized in that** it is provided with a visible sign for indicating the sense in which each said new tyre is to be fitted onto a vehicle, the protuberance whose radial distance from the points of connection between the external wall and the internal wall is greatest being placed to the outside of the vehicle.

6. - Method of using tyres on a heavy goods vehicle, these tyres comprising sidewalls (41, 42), a tread and a protuberance (51, 52) on each sidewall for deflecting lateral water expulsions, said method consisting in:
- producing such tyres by providing, on a sidewall (41), a first protuberance (51) with a first radial offset (H1) relative to the external surface of the tread and a second protuberance (52) on the other sidewall (42) with a second radial offset (H2), the first radial offset (H1) being less than the second radial offset (H2);
- fitting in the unworn state, onto an axle of a heavy goods vehicle, such tyres in the right position and in the left position in such a way that said tyres have their sidewalls (41) provided with the first protuberances (51) oriented towards the outside of said vehicle;
- after the treads have partially worn away, each of said tyres is reversed on its wheel in order to make the sidewalls (42) provided with the second protuberances (52) to be oriented towards the outside of the vehicle and to continue the use of the tyres until the intended wear limit of the tread is reached.

7. - Method of use according to Claim 6, **characterized in that** the tyres provided with protuberances are fitted onto the front axle of the vehicle.

## Patentansprüche

1. Luftreifen (1) für Schwerlastwagen, der aufweist:
- zwei Wülste (31, 32), die dazu bestimmt sind, mit einer Montagefelge in Kontakt zu stehen,
- einen Scheitel, der mit einem Laufstreifen (2) versehen ist, welcher eine Lauffläche (21) aufweist, die dazu bestimmt ist, während des Fahrens mit dem Boden in Kontakt zu kommen,
- zwei Flanken (41, 42), die die Verbindung zwischen diesem Laufstreifen und den Wülsten gewährleisten,
- einen ersten Vorsprung (51), der auf der einen Flanken vorsteht, und einen zweiten Vorsprung (52), der auf der anderen Flanke vorsteht, um die Wasserspritzer beim Fahren auf nasser Fahrbahn seitlich abzulenken, wobei die Vorsprünge (51, 52) radial bezüglich der Lauffläche versetzt sind,
wobei dieser Luftreifen **dadurch gekennzeichnet ist, dass** die radialen Versätze (H1, H2) der ersten und zweiten Vorsprünge (51, 52) unterschiedlich sind, wobei der radiale Versatz eines Vorsprungs, in einem Meridianschnitt, gleich dem radialen Abstand, d.h. lotrecht zur Drehachse, zwischen einem axial am weitesten außen liegenden Punkt des Laufstreifens und einem Punkt des Außenprofils des Vorsprungs ist, der als Tangentenpunkt einer das Außenprofil tangierenden und durch den Punkt des Laufstreifens verlaufenden Geraden erhalten wird, der sich axial am weitesten außen auf der Seite des Vorsprungs befindet.

2. Luftreifen (1, 1') für Schwerlastwagen nach Anspruch 1, **dadurch gekennzeichnet, dass** die Abweichung der radialen Versätze (H1, H2) mindestens gleich der Hälfte der Dicke des Laufstreifens ist.

3. Luftreifen (1, 1') für Schwerlastwagen nach Anspruch 1 oder Anspruch 2, **dadurch gekennzeichnet, dass** jeder Vorsprung (51, 52) sich radial vollständig innerhalb eines Profils gleich dem Querprofil des Laufstreifens befindet, und dieses Profil radial nach innen um mindestens die Hälfte der Dicke des Laufstreifens verschoben ist, um die Menge an zusätzlicher Kautschukmischung zu verringern, die mit dem Vorhandensein eines Vorsprungs verbunden ist.

4. Luftreifen (1) für Schwerlastwagen nach einem der Ansprüche 1 bis 3, **dadurch gekennzeichnet, dass** das radial äußere Profil des Vorsprungs einer Flanke und das radial innere Profil des Vorsprungs der anderen Flanke komplementär sind, d.h. dass diese Vorsprünge das Aufschieben eines Luftreifens auf einen anderen Luftreifen erlauben, wobei die Luftreifen mit diesen zwei Vorsprüngen versehen sind, wobei die Vorsprünge in der ineinandergeschobenen Stellung miteinander in Kontakt sind.

5. Luftreifen (1) für Schwerlastwagen nach einem der Ansprüche 1 bis 4, **dadurch gekennzeichnet, dass** er mit einem sichtbaren Zeichen versehen ist, um die Montagerichtung des neuen Luftreifens auf einem Fahrzeug anzuzeigen, wobei der Vorsprung, dessen radialer Abstand der Verbindungspunkte zwischen der Außenwand und der Innenwand am größten ist, auf der Außenseite des Fahrzeugs angeordnet ist.

6. Verfahren zur Verwendung von Luftreifen auf einem Schwerlastwagen, wobei diese Luftreifen Flanken (41, 42), einen Laufstreifen und einen Vorsprung (51, 52) auf jeder Flanke aufweisen, um die seitlichen Wasserspritzer abzulenken, wobei das Verfahren darin besteht:
- solche Luftreifen herzustellen, indem vorgesehen wird, auf eine Flanke (41) einen ersten Vorsprung (51) mit einem ersten radialen Versatz (H1) bezüglich der Außenfläche des Laufstreifens und einen zweiten Vorsprung (52) auf die andere Flanke (42) mit einem zweiten radialen Versatz (H2) aufzubringen, wobei der erste radiale Versatz (H1) geringer als der zweite radiale Versatz (H2) ist;
- auf eine Achse eines Schwerlastwagens solche fabrikneuen Luftreifen in der rechten und linken Position derart zu montieren, dass die Luftreifen ihre mit den ersten Vorsprüngen (51) versehenen Flanken (41) zur Außenseite des Fahrzeugs gerichtet präsentieren;
- nach einer teilweisen Abnutzung der Laufstreifen ein Wenden jedes der Luftreifen auf ihrem Rad derart durchzuführen, dass die mit den zweiten Vorsprüngen (52) versehenen Flanken (42) nach außerhalb des Fahrzeugs ausgerichtet präsentiert werden, und die Nutzung der Luftreifen bis zur vorgesehenen Grenzabnutzung des Laufstreifens fortzusetzen.

7. Anwendungsverfahren nach Anspruch 6, **dadurch gekennzeichnet, dass** die mit Vorsprüngen versehenen Luftreifen auf die Vorderachse des Fahrzeugs montiert werden.
